# EUROPÄISCHE PATENTSCHRIFT

(11) **EP 2 461 181 B1**
(45) Veröffentlichungstag und Bekanntmachung des Hinweises auf die Patenterteilung: **23.01.2013**
(21) Anmeldenummer: 11185110.1
(22) Anmeldetag: 13.10.2011
(51) Int. Cl.: G01S 17/02, G01S 17/87, G01S 17/89, G06T 7/00

(54) **Sensoranordnung zur Objekterkennung**
Sensor assembly for recognising objects
Dispositif de détection destiné à l'identification d'objet

(30) Priorität: 01.12.2010 DE 102010060942
(43) Veröffentlichungstag der Anmeldung: 06.06.2012
(73) Patentinhaber: Sick AG, 79183 Waldkirch (DE)
(72) Erfinder: Rothenberger, Bernd, 79365 Rheinhausen (DE)
(74) Vertreter: Hehl, Ulrich

(56) Entgegenhaltungen:
- EP-A2- 1 321 777
- CUI ET AL: "Multi-modal tracking of people using laser scanners and video camera", IMAGE AND VISION COMPUTING, ELSEVIER, GUILDFORD, GB, Bd. 26, Nr. 2, 9. November 2007 (2007-11-09), Seiten 240-252, XP022338755, ISSN: 0262-8856, DOI: 10.1016/J.IMAVIS.2007.05.005
- JAMES MURE-DUBOIS AND HEINZ HUGLI: "Fusion of Time of Flight Camera Point Clouds", WORKSHOP ON MULTI-CAMERA AND MULTI-MODAL SENSOR FUSION ALGORITHMS AND APPLICATIONS, , 18. Oktober 2008 (2008-10-18), Seiten 1-21, XP007914303, Gefunden im Internet: URL:http://hal.archives-ouvertes.fr/docs/0 0/32/67/81/PDF/1569139570.pdf
- RABBANI ET AL: "An integrated approach for modelling and global registration of point clouds", ISPRS JOURNAL OF PHOTOGRAMMETRY AND REMOTE SENSING, AMSTERDAM [U.A.] : ELSEVIER, Bd. 61, Nr. 6, 20. Januar 2007 (2007-01-20), Seiten 355-370, XP005737056, ISSN: 0924-2716, DOI: 10.1016/J.ISPRSJPRS.2006.09.006

## Beschreibung

Die Erfindung betrifft eine Sensoranordnung zur Objekterkennung in einem Überwachungsbereich mit mindestens zwei entfernungsmessenden Sensoren nach dem Oberbegriff von Anspruch 1 sowie ein Verfahren zur Registrierung mehrerer entfernungsmessender Sensoren nach dem Oberbegriff von Anspruch 11.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Eine wichtige sicherheitstechnische Anwendung ist die Absicherung von Maschinen, die eine Gefahrenquelle bilden. Der Sensor überwacht dabei ein innerhalb des Überwachungsbereiches definiertes Schutzfeld, das während des Betriebs der Maschine von Bedienpersonal nicht betreten werden darf. Erkennt der Sensor einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Abschaltung noch rechtzeitig zu verhindern und so die Verfügbarkeit der Anlage zu erhöhen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Oftmals ist es nicht möglich, den gesamten zu überwachenden Bereich mit einem einzigen Sensor abzudecken. Beispielsweise ist ein nach vorne ausgerichteter Laserscanner an einem Fahrzeug blind gegenüber rückwärtigen Ereignissen. Aber auch innerhalb des Sichtbereichs eines Sensors genügt die Auflösung nach einer gewissen Reichweite nicht mehr, kleinere Objekte sicher zu erkennen. Außerdem können Abschattungen verhindern, dass ein einzelner Sensor alle Objekte in Sichtrichtung erfasst. Ein Ausweg besteht darin, mehrere Sensoren zu verwenden und deren Daten zu fusionieren.

Die von mehreren Sensoren bestimmten Datensätze einer Szenerie aus verschiedenen Perspektiven beziehen sich zunächst auf das jeweils eigene Koordinatensystem. Um diese Daten in einem gemeinsamen Koordinatensystem auswerten zu können, muss eine entsprechende Transformationsvorschrift ermittelt werden. Das Zusammenfügen mehrerer Bilder aus unterschiedlichen Perspektiven wird als Registrierung bezeichnet. Häufig ist die Position und Orientierung eines Sensors bekannt, und die Position und Orientierung der anderen Sensoren wird über eine Registrierung relativ zu diesem einen Sensor ermittelt. Dies ist äquivalent zu dem Problem, eine Transformationsvorschrift von dem Koordinatensystem eines jeweiligen Sensors in ein gemeinsames Weltkoordinatensystem aufzufinden. Die Registrierung lässt sich herkömmlich nicht ohne Weiteres automatisieren, sondern erfordert Zusatzmaßnahmen und vertieftes Wissen, um die Sensordaten zu interpretieren. Dies ist eine erhebliche Hürde, derartige Mehrsensoranordnungen in sicherheitstechnischen Anwendungen einzusetzen. In der DE 10 2004 043 515 A1 ist ein Verfahren zum Erfassen eines Objekts offenbart, bei dem zumindest zwei Sensoren jeweils einen Teil des Überwachungsbereichs überwachen und deren Einzelbilder in einem gemeinsamen Koordinatensystem erzeugt werden. Auch aus der EP 1 405 100 B1 ist bekannt, mehrere Sensoren zu verwenden, um den beobachtbaren Bereich zu überwachen. Diese Dokumente schweigen aber zu der Frage der Registrierung und gehen bereits davon aus, dass die beiden Sensoren ihre gegenseitigen Koordinatensysteme kennen.

Eine übliche, aber sehr aufwändige Maßnahme zur Unterstützung der Registrierung besteht darin, spezielle Marken, beispielsweise Retroreflektoren, in dem gemeinsamen Sichtfeld der Sensoren anzuordnen. Bekannt ist außerdem, mehreren horizontal montierten Laserscannern ein schmales zylinderförmiges Ziel in verschiedenen Positionen zu präsentieren. Zylindrische Ziele sind aber dem menschlichen Bein in Sicherheitsanwendungen sehr ähnlich. Die Registrierung erfordert, das Ziel an verschiedene Positionen zu bringen und jeweils interaktiv einen Bereich in dem Bild anzugeben, in dem sich das Ziel befindet, da eine automatische Erkennung nicht zuverlässig ist. Somit kann auch hier die Registrierung nur mit einigem Aufwand und durch entsprechend qualifiziertes Fachpersonal vorgenommen werden.

Es gibt bekannte Verfahren, die eine Registrierung allein aus den Messdaten vornehmen. In P. Besl und N. McKay, "A method for registration of 3-D shapes", IEEE PAMI 14(2):239-256, 1992 wird dafür der ICP-Algorithmus (iterative closest point) verwendet. Ein anderes Verfahren ist als NDT bekannt (normal distribution transform) und wird beispielsweise in den Arbeiten von P. Biber, "The normal distributions transform: a new approach to laser scan matching", Technical report 3, Wilhelm Schickard Institute for Computer Science, Graphical-Interactive Systems (WSI/GRIS), University of Tubingen oder N. Ripperda und C. Brenner, "Marker-free registration of terrestrial laser scans using the normal distribution transform", 3D-ARCH 2005 diskutiert. Allerdings konvergieren diese Algorithmen nur dann, wenn gute Anfangsbedingungen aus einer manuellen Grobausrichtung vorgegeben werden.

In einem anderen bekannten Ansatz aus L. Bornaz, F. Rinaudo, "Terrestrial laser scanner data processing", International Archives of Photogrammetry and Remote Sensing, Commision V, ISPRS XX Congress, Istanbul, Turchia, 12-23 July 2004 werden natürliche Merkmale wie beispielsweise Ecken als Marken verwendet. Diese natürlichen Marken müssen durch den Anwender gekennzeichnet werden, und wenn eine Szenerie nicht mindestens zwei geeignete Merkmale aufweist, so scheitert die Registrierung.

H. J. Zhao and R. Shibasaki, "A robust method for registering ground-based laser range images of urban outdoor objects", Photo. Eng. Remote Sensing 67 (10) (2001) 1143-1153 nutzen markante Liniensegmente natürlicher Objekte zur Registrierung mehrerer Scanner, wobei die Optimierung das Auffinden von Linienkorrespondenzen beinhaltet. Dieses Verfahren wird in Jinshi Cui, Hongbin Zha, Huijing Zhao, Ryosuke Shibasaki, "Multi-modal tracking of people using laser scanners and video camera", Image and Vision Computing 2007 eingesetzt, um in einer Außenanwendung Personen zu zählen. Offensichtlich hängt die erfolgreiche Registrierung von dem Vorhandensein entsprechender Liniensegmente ab.

Andrew Fitzgibbon, "Robust registration of 2D and 3D point sets", Image and Vision Computing 2003 sowie BMVC 2001 beschreibt ein Verfahren zur Registrierung von 2D- und 3D-Daten, geht dabei aber nur auf Punktkorrespondenzen ein.

Die EP 1 321 777 A2 offenbart ein Verfahren zur Aufnahme eines Objektraums, bei dem ein Laserscanner Aufnahmen von verschiedenen Standorten aus erzeugt. Mit Hilfe von in dem Objektraum aufgestellten Reflektormarken werden die unterschiedlichen Aufnahmen anschließend und in der Regel off-line miteinander verschmolzen, wobei die Referenzmarken zur Deckung gebracht werden. Der Laserscanner erzeugt die Messdaten einmal mit einem kleinen Öffnungswinkel des Scanstrahls für eine hohe Messgenauigkeit und einmal mit einer größeren Divergenz, um die Retroreflektoren zu erfassen.

In der Arbeit von J. Mure-Dubois et al., "Fusion of Time of Flight Camera Point Clouds", workshop on multi-camera and multi-modal sensor fusion algorithms and applications, 18.10.2008, Seiten 1-21 wird eine Echtzeitfusion von mehreren Entfernungskarten offenbart, die mit TOF-Kameras aufgezeichnet wurden. Das Registrierverfahren nutzt aber die Intensitätsdaten und nicht die Entfernungsdaten. Dazu werden bestimmte ebene Registrierziele bekannter Geometrie aufgenommen, um die Rotationsparameter zu bestimmen. Die Translationsparameter werden nur halbautomatisch anhand einer händisch bestimmten Menge von 6 bis 10 Punktepaaren ermittelt.

Aus dem Artikel von Rabbani et al., "An integrated approach for modelling and global registration of point clouds", ISPRS Journal of Photogrammetry and Remote Sensing, Elsevier, Bd. 61 (6) vom 20.01.2007, Seiten 355-370 ist ein weiteres Registrierverfahren für mehrere Laserscanner bekannt. Dabei werden die erfassten Objektdaten modelliert, beispielsweise Zylinder, Tori, Kugeln oder Ebenen erkannt, und die Registrierung erfolgt anhand dieser Modelle.

Es gibt somit keine bekannte Möglichkeit, Laserscanner und ähnliche Sensoren zu fusionieren, ohne dass dabei umständliche Zusatzmaßnahmen oder vertieftes Fachwissen erforderlich wäre.

In der unveröffentlichten europäischen Patentanmeldung unter dem Aktenzeichen EP 10154904 wird ein ebenes Kalibrierziel, beispielsweise eine Ebene in der Größe von ca. 50cm x 50cm verwendet, welches leicht zu führen ist und sich zugleich ausgezeichnet in den Messdaten lokalisieren lässt. Dieses Kalibrierziel wird durch einen gemeinsamen Sichtbereich der Sensoren geführt. Dabei kann es von jedem der zu registrierenden Sensoren erfasst werden, um die Position und Orientierung des Kalibrierziels in dem jeweiligen eigenen Koordinatensystem zu bestimmen. Aus diesen Informationen wird dann eine Transformation berechnet, welche die geometrische Rotation und Translation der Sensoren zueinander definiert.

Selbst mit diesem Vorgehen bleibt ein weiteres Problem bei der automatischen geometrischen Registrierung von optischen mehrdimensionalen Entfernungsmesssensoren bestehen. Die Berechnung von Position und Orientierung des Kalibrierziels ist nämlich wegen der Rauschanteile der Messwerte des Sensoren stets fehlerbehaftet.

Unter der Annahme statistischen Rauschens kann man den entstehenden Registrierungsfehler dadurch reduzieren, dass das Kalibrierziel über einen gewissen Zeitraum im Sichtfeld der Sensoren präsentiert und bewegt wird, damit eine großen Zahl Transformationen gemittelt werden kann. Ein normalverteilter Fehler reduziert sich dabei aber nur mit der Wurzel der Wiederholungen. Bei hohen Ansprüchen an die Präzision müssten deshalb je nach Rauschanteil der Messdaten deutlich mehr Transformationen berechnet werden, als mit einem komfortablen und schnellen Registrierungsprozess vereinbar sind.

Daher lautet die Aufgabe der Erfindung, mehrere Sensoren auf einfache und zuverlässige Art zu registrieren.

Diese Aufgabe wird durch eine Sensoranordnung gemäß Anspruch 1 und ein Verfahren zur Registrierung von mehreren entfernungsmessenden optoelektronischen Sensoren gemäß Anspruch 11 gelöst. Dabei geht die Erfindung von dem Grundgedanken aus, mehrere Sensoren für einen vergrößerten Sichtbereich, eine bessere Auflösung, zur Vermeidung von Abschattungen oder gegebenenfalls auch zur Kombination verschiedener, heterogener Sensorprinzipien zu fusionieren. Dazu erfolgt eine automatische Registrierung anhand von Messdaten eines Kalibrierziels. Von diesem Kalibrierziel werden im allgemeinen Position und Orientierung erfasst. Eine Erkenntnis der Erfindung liegt nun darin, dass unter Berücksichtigung von Rauschanteilen der Messdaten eine sehr genaue Bestimmung der Position, nicht jedoch der Orientierung eines Kalibrierziels möglich ist. Deshalb wird erfindungsgemäß die Position, nicht aber die Orientierung der Kalibrierziels verwendet. Eine Orientierungsinformation wird stattdessen aus der Verbindungslinie zwischen mehreren verschiedenen Positionen des Kalibrierziels gewonnen. Dadurch entsteht so etwas wie ein großer, virtueller Kalibrierkörper. Für eine genaue Registrierung ist vorteilhaft, wenn die erste und die zweite Position einen größeren Abstand zueinander haben, damit eine große Basis für die Transformation verfügbar ist.

Die Erfindung hat den Vorteil, dass eine präzise Registrierung trotz verrauschter Messdaten ermöglicht wird. Für den verbleibenden Registrierfehler lässt sich ein Maß angeben, so dass klare Spezifikationen für das fusionierte Sensorsystem angegeben werden können, die auch sicherheitstechnischen Standards genügen. Dabei reichen dennoch sehr wenige Schritte und damit eine kurze Registrierzeit aus, in der das Kalibrierziel den Sensoren angeboten wird. Das Kalibrierziel kann dabei klein und gut handhabbar bleiben. Das Vorgehen ist robust und anwenderfreundlich zugleich, verlangt von dem Anwender praktisch keine Vorkenntnisse und kann deshalb nahtlos in bestehende Konfigurationsprozesse integriert werden. Eine manuelle Nachbearbeitung oder Interpretation der Daten ist für die Registrierung nicht erforderlich.

Die gemeinsame Steuerungseinheit ist bevorzugt unabhängig von dem Laserscanner und dem weiteren Sensor. Denkbar ist aber auch, die gemeinsame Steuerungseinheit als Teil eines der Sensoren der Sensoranordnung vorzusehen oder sie sogar als verteiltes System zu implementieren.

Die gemeinsame Steuerungseinheit ist bevorzugt dafür ausgebildet, in dem Registriermodus mindestens eine von der ersten Position und der zweiten Position verschiedene dritte Position bezüglich des ersten Sensors und bezüglich des zweiten Sensors zu ermitteln und die Transformationsvorschrift als diejenige zu bestimmen, welche mehrere oder alle Verbindungslinien zwischen den Positionen bezüglich des ersten Koordinatensystems mit entsprechenden Verbindungslinien bezüglich des zweiten Koordinatensystems bestmöglich zur Deckung bringt. Durch jede zusätzliche Position entsteht eine quadratisch anwachsende Vielzahl möglicher Verbindungslinien, so dass rasch auch eine noch höhere Präzision der Registrierung erreicht wird. Dabei müssen nicht notwendig sämtliche kombinatorisch möglichen Verbindungslinien ausgewertet werden, sondern es kann eine Auswahl getroffen werden, beispielsweise von längeren Verbindungslinien oder solchen, die möglichst nicht parallel zueinander stehen. Da die beste Transformation für eine bestimmte Verbindungslinie nicht unbedingt auch das Optimum für die übrigen Verbindungslinien darstellt, wird das System in der Regel überbestimmt. Dann kann ein geeignetes Optimierungsverfahren eingesetzt werden, beispielsweise ein Least-Mean-Square-Verfahren.

Das Kalibrierungsziel weist bevorzugt eine ebene Fläche auf, wobei die gemeinsame Steuerungseinheit dafür ausgebildet ist, aus den in jeweils einer Pose des Kalibrierziels aufgenommenen Messpunkten Cluster zu bilden und das Kalibrierziel in dem Cluster als Linie zu erkennen. Damit findet ein einfaches und leicht verfügbares Kalibrierziel Verwendung, welches lediglich eine flache Seite haben muss. Besonders geeignet ist eine Ebene, also beispielsweise eine Papp- oder Kunststoffplatte. Eine ebene Fläche lässt sich in den Messdaten der Sensoren besonders einfach und zuverlässig lokalisieren, weil typischerweise besonders viele Messpunkte erfasst werden, und dabei wird die ebene Fläche von anderen Vordergrundobjekten wie Armen oder Beinen automatisch unterschieden. Daraus resultiert eine verbesserte Registrierung mit weniger systematischen Messfehlern in den Sensordaten. Wenn der Sensor ein zweidimensionaler Sensor mit einer Überwachungsebene ist, wie im Falle eines Laserscanners, so schneidet sich die ebene Fläche des Kalibrierziels mit der Überwachungsebene in einer Linie, und diese Linien werden für die Registrierung verwendet.

Die gemeinsame Steuerungseinheit ist bevorzugt dafür ausgebildet, die Linie in dem Cluster mit einem RANSAC-Verfahren zu erkennen, bei dem wiederholt eine Stichprobe von Messpunkten aus dem Cluster gezogen und ermittelt wird, wie gut eine Linie durch die Stichprobe das Cluster repräsentiert. Ein RANSAC-Algorithmus ist besonders geeignet, schnell und zuverlässig die Lage der Linien oder Flächen zu schätzen und somit anschließend die notwendige Transformation aufzufinden. Durch das wiederholte Ziehen der Stichproben wird ausgeschlossen, dass zufällig nur solche Stichproben Verwendung finden, welche die zugehörigen Cluster schlecht repräsentieren. Alternativ sind auch andere Verfahren denkbar, um eine das Cluster repräsentierende Linie aufzufinden. Im einfachsten Fall wird lediglich eine Mittellinie durch das Cluster gelegt. Dabei gehen dann aber, anders als bei einem RANSAC-Verfahren, alle verrauschten Messwerte mit gleichem Gewicht in die Linienschätzung ein.

Die gemeinsame Steuerungseinheit ist bevorzugt dafür ausgebildet, die Position des Kalibrierziels aus einem Bündel von mehreren Linien zu ermitteln, die in jeweils unterschiedlichen Posen des Kalibrierziels bestimmt werden, insbesondere die Position als das Zentrum des Bündels zu ermitteln. Eine Positionsschätzung basiert so auf einer Vielzahl von Posen des Kalibrierziels und wird wegen der statistischen Fehlerverteilung aufgrund verrauschter Messdaten sehr genau. Als Position des Bündels wird beispielsweise dessen Zentrum angenommen. Als Bündelzentrum kann ein gemeinsamer Schnittpunkt der einzelnen Linien bestimmt werden. Wegen der unvermeidlichen Translationsbewegungen des Kalibrierziels an einer Position werden sich die Linien in aller Regel nicht in einem geometrischen Punkt schneiden, so dass stattdessen ein Punkt gesucht wird, welcher einem gemeinsamen Schnittpunkt möglichst nahe kommt.

Die gemeinsame Steuerungseinheit ist bevorzugt dafür ausgebildet, so viele unterschiedliche Posen des Kalibrierziels auszuwerten, dass aus dem Bündel der zugehörigen Linien die Position mit einer vorgegebenen Genauigkeit ermittelbar ist, insbesondere eine Rückmeldung an eine Bedienperson zu geben, ob noch weitere Posen für die Erreichung der vorgegebenen Genauigkeit erforderlich sind. Dabei werden für ein praktikables Registrierverfahren die Posen des Kalibrierziels nicht etwa einzeln angefordert, sondern automatisch nacheinander aus einer Schwenkbewegung abgeleitet. Dadurch sind ohne weiteres zehn oder mehr Mehrfachmessungen unterschiedlicher Posen in weniger als einer Sekunde möglich. Der Bedienperson, die das Kalibrierziel führt, wird dann durch optische oder akustische Rückmeldung signalisiert, ob die Positionserfassung erfolgreich war oder ob die Schwenkbewegung fortgesetzt beziehungsweise wiederholt werden muss. Die Genauigkeit wird beispielsweise als statistisches Vertrauensintervall angegeben, etwa in Form einer 5σ-Umgebung. Ein typischer geforderter Positionsfehler im Falle von Laserscannern als zu registrierenden Sensoren liegt bei unter einem Zentimeter, womit sich Winkelfehler von weniger als einem zehntel Grad realisieren lassen.

Die gemeinsame Steuerungseinheit ist bevorzugt dafür ausgebildet, Messpunkte der Sensoren ohne das Kalibrierziel in deren Sichtbereich zu bestimmen, um diese Messpunkte während des Registrierens und/oder des Messbetriebs als Hintergrund auszublenden. Häufig befinden sich Objekte in der Szenerie, auch Objekte mit ebenen Flächen wie Werktische oder dergleichen. Durch diesen Schritt verbleiben nur die interessierenden Vordergrundobjekte in den Messdaten.

Die Sensoranordnung umfasst bevorzugt mindestens einen dritten Sensor, wobei die gemeinsame Steuerungseinheit dafür ausgebildet ist, eine Vielzahl von Sensoren, deren Sichtbereiche zumindest paarweise wenigstens teilweise überlappen, jeweils paarweise zu registrieren und anschließend Registrierungsfehler gleichmäßig auf alle Paare von Sensoren zu verteilen. Mit jedem weiteren Sensor wird der Sichtbereich zusätzlich erweitert. Dieser Vorteil würde weitgehend eingebüßt, wenn alle Sensoren sich zur Registrierung in einem Teil ihres Sichtbereichs überlappen müssten. Andererseits führt die paarweise Registrierung zu einem aufakkumulierten Registrierungsfehler. Indem dieser Fehler nachträglich gleichmäßig verteilt wird, gelingt es, die Genauigkeitsanforderungen dennoch einzuhalten. Sofern mehr als zwei Sensoren einen gemeinsamen Sichtbereich haben, können sie auch gemeinsam statt paarweise zueinander registriert werden, indem die Verbindungslinien in den jeweiligen Koordinatensystemen aller dieser Sensoren gemeinsam durch ein Optimierungsverfahren wie ein Least-Mean-Square-Verfahren zur Deckung gebracht werden.

Die Sensoren sind bevorzug als Laserscanner ausgebildet, deren Überwachungsbereich eine Überwachungsebene ist und die jeweils einen Lichtsender zum Aussenden eines Lichtstrahls, einen Lichtempfänger zum Erzeugen eines Empfangssignals aus dem von einem Objekt in der Überwachungsebene remittierten Lichtstrahl, eine bewegliche Ablenkeinheit zur periodischen Abtastung der Überwachungsebene sowie eine Lichtlaufzeitbestimmungseinheit zur Entfernungsbestimmung aus der Zeitdifferenz zwischen Aussenden und Empfang des Lichtstrahls aufweisen. Nach erfolgter Registrierung entsteht durch die Fusion zweier oder mehrerer Laserscanner aus Anwendersicht ein "virtueller Laserscanner" mit vergrößertem Sichtbereich.

Die Überwachungsebenen der Laserscanner liegen besonders bevorzugt in derselben Ebene. Dabei ist eine Verkippung und ein Abstand der Ebenen im Rahmen von Toleranzen erlaubt. Auch wenn die Sensoren dieselbe Ebene überwachen, sind damit noch nicht die Überwachungsbereiche identisch, da die Sensoren nicht notwendig Sichtwinkel von 360° aufweisen. Selbst bei Sensoren mit Rundumsicht kann eine Fusion sinnvoll sein, um abgeschattete Bereiche einzusehen oder um höhere lokale Auflösungen zu erreichen. Sensoren können auch kopfüber zueinander montiert sein, dies ist bei der Registrierung zu erkennen. Durch die Einschränkung auf Laserscanner mit gleicher Überwachungsebene müssen bei der Registrierung nicht sämtliche sechs Freiheitsgrade des allgemeinen dreidimensionalen Falls bestimmt werden, sondern nur zwei Translationsfreiheitsgrade und ein Rotationsfreiheitsgrad eines zweidimensionalen Problems.

Vorteilhafterweise ist ein sicherer Ausgang vorgesehen, über den von der gemeinsamen Steuerungseinheit ein Abschaltsignal an eine überwachte Gefahrenquelle ausgebbar ist, wenn ein unzulässiger Objekteingriff in einen Schutzbereich erkannt wird. Ein solcher Ausgang ist üblicherweise zweikanalig ausgebildet und wird oft als OSSD (Output Signal Switching Device) bezeichnet. Auch die Sensoren selbst sowie die gemeinsame Steuerungseinheit sind bevorzugt sicher im Sinne der einleitend genannten Normen oder deren Entsprechung ausgebildet. Die fusionierten Sensoren sind dann ohne Einschränkung in sicherheitstechnischen Anwendungen einsetzbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines entfernungsmessenden Laserscanners nach dem Stand der Technik;
- Fig. 2: eine Draufsicht auf zwei entfernungsmessende Sensoren, die über eine gemeinsame Steuerungseinheit fusioniert sind, mit deren Sichtbereichen und einem ebenen Kalibrierziel;
- Fig. 3: ein Ablaufdiagramm des erfindungsgemäßen Registrierungsverfahrens;
- Fig. 4a: ein beispielhaftes Cluster von mit den Sensoren gemäß Figuren 1 oder 2 aufgezeichneten Messdaten eines Kalibrierziels mit einer darin erkannten Linie als Schnitt von Überwachungsebene und Kalibrierziel;
- Fig. 4b: ein Bündel von mehreren Linien gemäß Figur 4a, die bei unterschiedlichen Posen des Kalibrierziels erkannt werden:
- Fig. 5: eine Darstellung mehrerer Bündel gemäß Figur 4b an zwei unterschiedlichen Positionen aus Sicht zweier zueinander zu registrierender Sensoren;
- Fig. 6: eine Darstellung von drei Bündeln gemäß Figur 4b aus Sicht nur eines Sensors zur Erläuterung eines auf mehr als zwei Positionsbestimmungen verallgemeinerten Registrierungsverfahrens;
- Fig. 7a: eine schematische Draufsicht auf ein Fahrzeug, welches zu allen vier Seiten durch einen entfernungsmessenden Sensor abgesichert wird; und
- Fig. 7b: eine beispielhafte Darstellung der Positionen und Orientierungen der Sensoren gemäß Figur 7a aus Sicht der gemeinsamen Steuerung nach Abschluss der Registrierung.

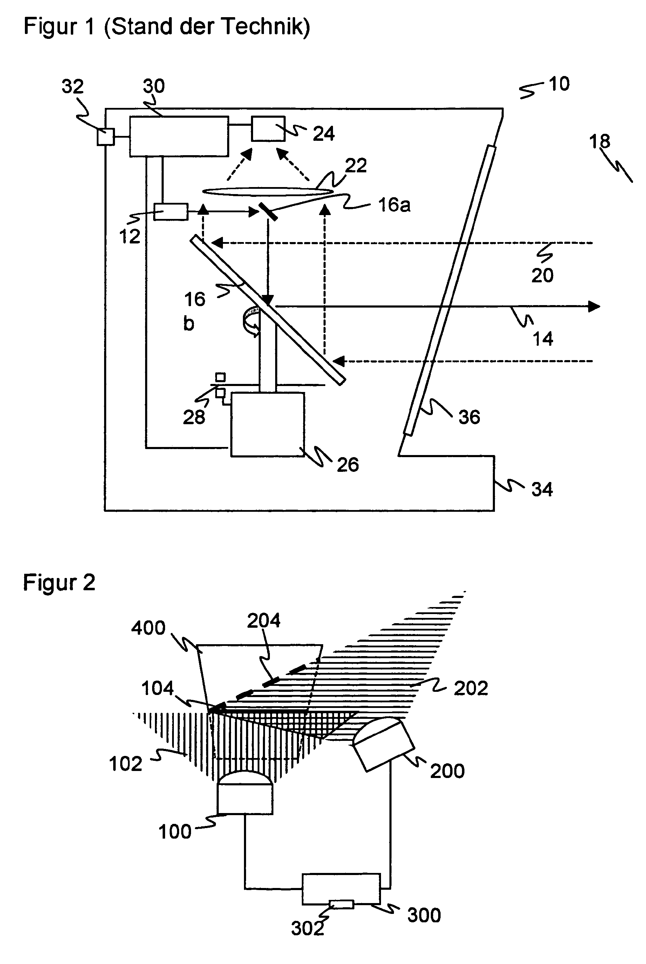

Anhand der Figur 1 wird zunächst die bekannte allgemeine Funktionsweise eines entfernungsmessenden Laserscanners 10 beschrieben. Ein Laserscanner ist ein Beispiel für einen entfernungsmessenden optoelektronischen Sensor, wobei die Erfindung nicht auf diesen Sensortyp beschränkt ist. Andere Beispiele für derartige Sensoren sind dreidimensionale oder tiefenauflösende Kameras, etwa stereoskopische Kamerasysteme oder Lichtlaufzeitkameras insbesondere nach dem Prinzip der Photomischdetektion (PMD). Solche Sensoren können statt mit matrixförmigen auch lediglich mit zeilenförmigen Bildsensoren ausgestattet sein, so dass nicht der ganze Raum, sondern wie bei dem Laserscanner 10 nur eine zweidimensionale Ebene überwacht wird.

In dem Laserscanner 10 wird ein von einem Lichtsender 12, beispielsweise einem Laser, erzeugter Lichtstrahl 14, der einzelne Lichtimpulse aufweist, über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitsscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird von dem Lichtempfänger 24 ein reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Sicherheitsscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Messdaten mit Polarkoordinaten aller Objekte in dem Überwachungsbereich 18 zur Verfügung. Diese Messdaten werden über eine Schnittstelle 32 ausgegeben.

Die genannten Funktionskomponenten sind in einem Gehäuse 34 angeordnet, das frontseitig, also im Bereich des Lichtaus- und Lichteintritts, eine Frontscheibe 36 aufweist. Die Auswertungseinheit 30 kann abweichend von der Darstellung auch ganz oder teilweise außerhalb des Sensors 10 implementiert sein. In diesem Fall werden an der Schnittstelle 32 Rohdaten ausgegeben. Umgekehrt können in einer alternativen Ausgestaltung über die Schnittstelle 32 Messdaten oder Rohdaten eines anderen Sensors empfangen werden, um diese gemeinsam in der Auswertungseinheit 30 zu bearbeiten.

Figur 2 zeigt eine schematische Draufsicht auf eine Anordnung eines ersten Sensors 100 und eines zweiten Sensors 200. Beide Sensoren 100, 200 können beispielsweise als entfernungsmessende Laserscanner gemäß der Erläuterung zu Figur 1 ausgebildet sein, und sie überwachen jeweils eine erste Überwachungsebene 102 und eine zweite Überwachungsebene 202. Die Sensoren 100, 200 sind jeweils mit einer gemeinsamen Steuerungseinheit 300 verbunden. Alternativ kann die gemeinsame Steuerungseinheit 300 in einen der Sensoren 100, 200 integriert werden. Es ist denkbar, in analoger Weise weitere Sensoren an die gemeinsame Steuerungseinheit 300 anzuschließen.

Die gemeinsame Steuerungseinheit 300 empfängt Messdaten beider angeschlossener Sensoren 100, 200 und fusioniert sie in einem gemeinsamen Weltkoordinatensystem, so dass sich die gesamte Anordnung wie ein Sensor mit erweitertem Sichtbereich verhält. Die gemeinsame Steuereinheit 300 kann auch dazu dienen, die jeweiligen Einzelaufnahmen der Sensoren 100, 200 zu synchronisieren.

In einer beispielhaften Anwendung in der Sicherheitstechnik werden die Positionen und Abmessungen von Objekten daraufhin überprüft, ob ein in dem gemeinsamen Überwachungsbereich 102, 202 detektiertes Objekt einen unzulässigen Schutzfeldeingriff verursacht. Ist das der Fall, so wird über einen sicheren Ausgang 302 ein sicherheitsgerichtetes Abschaltsignal ausgegeben. In einer stationären Anwendung führt dieses Abschaltsignal beispielsweise zu einem Nothalt einer gefährlichen Maschine, während es in einer mobilen Anwendung als Brems- oder Ausweichsignal wirkt.

Voraussetzung für die Fusion der Sensordaten ist eine Registrierung der beiden Sensoren 100, 200. Dazu wird in einem Registrierungsmodus ein Kalibrierziel 400 in dem überlappenden Sichtbereich beider Sensoren 100, 200 angeordnet. Als Kalibrierziel 400 eignet sich besonders gut eine ebene Platte oder zumindest ein Körper, der eine ebene Fläche aufweist. Auf diese Fläche kann noch eine Bedienungsanleitung aufgedruckt werden, welche einer Bedienperson des Kalibrierziels 400 in kurzer, prägnanter Form die notwendigen Schritte zur Registrierung vermittelt.

Das Kalibrierziel 400 schneidet sich mit den Überwachungsebenen 102, 202 in jeweils einer Schnittlinie 104, 204. In der Darstellung der Figur 2 sind die Überwachungsebenen 102, 202 gegeneinander verkippt. Dadurch entstehen unterschiedliche Schnittlinien 104, 204. Aber auch dann, wenn die Überwachungsebenen 102, 202 in derselben geometrischen Ebene liegen, etwa weil sie beide horizontal ausgerichtet sind, entstehen in den jeweiligen eigenen Koordinatensystemen der Sensoren 100, 200 wegen der unterschiedlichen Perspektive verschiedene Schnittlinien 104, 204.

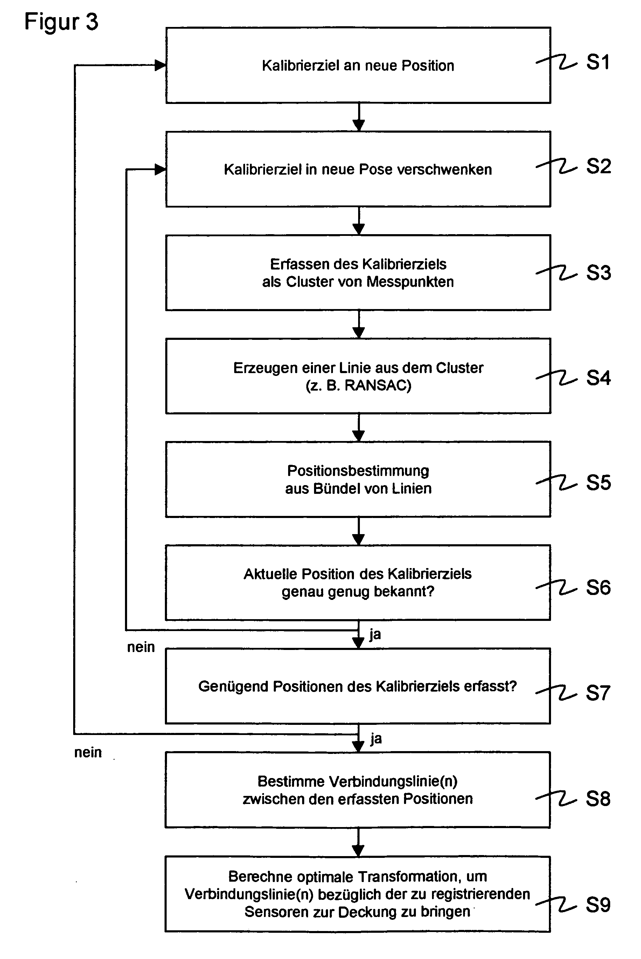

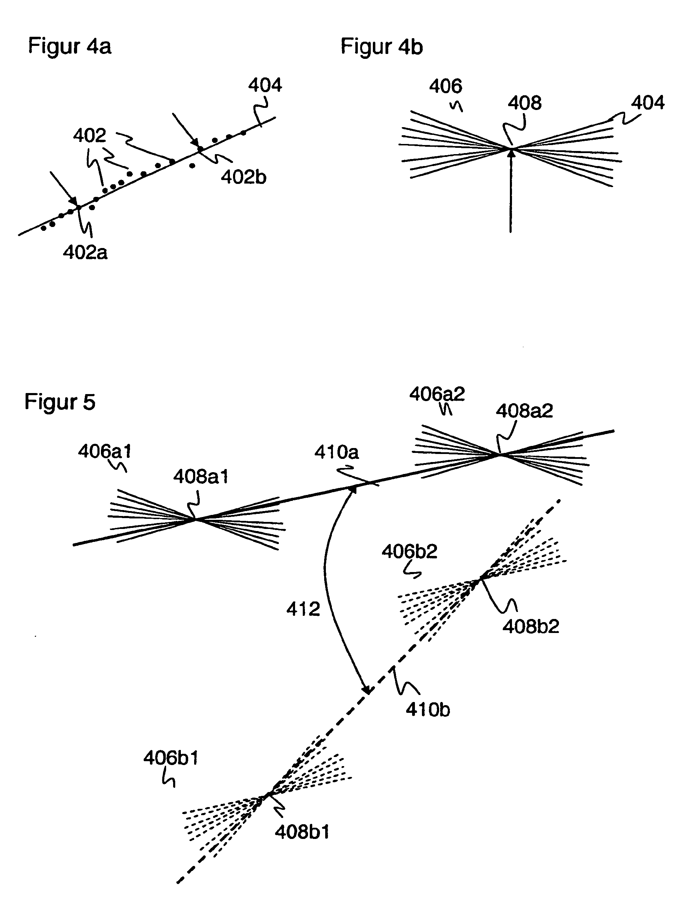

Die erfindungsgemäße Registrierung der Sensoren 100, 200 mit Hilfe des Kalibrierziels 400 und der Schnittlinien 104, 204 wird im Folgenden anhand eines in Figur 3 gezeigten Ablaufschemas erläutert. Dabei illustrieren die Figuren 4 und 5 verschiedene Zwischenschritte.

Vorab wird der Hintergrund ausgeblendet, indem Messdaten der ursprünglichen Szenerie ohne das Ziel 400 aufgenommen und von den späteren Messdaten abgezogen werden. Von anderen Vordergrundobjekten wird das Kalibrierziel 400 an seiner ebenen Fläche und daran unterschieden, dass es im Verlauf der Registrierung in verschiedenen Positionen und Orientierungen angeboten wird. Außerdem ist es möglich, der Steuerungseinheit 300 die Abmessungen des Kalibrierziels 400 mitzuteilen beziehungsweise ein Kalibrierziel 400 mit standardisierten Abmessungen zu verwenden.

Dann wird in einem ersten Schritt S1 der eigentlichen Registrierung das Kalibrierziel 400 an eine neue Position gebracht. Dabei sollte die Bedienperson darauf achten, dass das Kalibrierziel 400 von beiden Sensoren 100, 200 erfasst wird, wobei von den Sensoren 100, 200 oder der gemeinsamen Steuerung 300 entsprechende Rückmeldungen gegeben werden können. Auch sollte beachtet werden, dass im Verlauf der Registrierung zumindest zwei Positionen mit einem ausreichend großen Abstand zueinander gewählt werden.

In einem zweiten Schritt S2 wird das Kalibrierziel 400 an der gewählten Position in eine neue Pose verschwenkt. In der Praxis ist dies keine diskrete Bewegung, bei der eine gewählte Pose aufrechterhalten wird, sondern eine fließende Schwenkbewegung. Die Sensoren 100, 200 sind in der Lage, eine Vielzahl von Posen innerhalb kurzer Zeit aus einer solchen Bewegung des Kalibrierziels 400 heraus zu erfassen. Die Position selbst sollte bei der Schwenkbewegung möglichst konstant bleiben.

In einer momentanen Pose erfassen die Sensoren 100, 200 das Kalibrierziel in einem dritten Schritt S3 als rein beispielhaft für einen der Sensoren 100, 200 in Figur 4a illustriertes Cluster von Messpunkten 402. Wegen systematischer und rauschbedingter Messungenauigkeiten liegen die Messpunkte 402 nur grob auf den Schnittlinien 104, 204.

Daher wird in einem vierten Schritt S4 eine Linie 404 gesucht, die möglichst genau die Lage des Kalibrierziels 400 wiedergibt. Diese Suche entspricht letztlich einer linearen Regression, für die zahlreiche Verfahren bekannt und geeignet sind. Als ein besonders robustes Verfahren wird hier kurz beispielhaft ein RANSAC-Algorithmus beschrieben. Dazu werden zufällig zwei Messpunkte 402a-b gezogen, welche eine eindeutige Linie 404 definieren. Wie gut diese hypothetische Linie 404 die Messdaten repräsentiert, wird anschließend durch die Anzahl von Messpunkten 402 bestimmt, welche in einer Toleranzentfernung zu der Linie liegen. Die Menge dieser um Ausreißer bereinigten Messpunkte wird als *consensus set* bezeichnet. Das zufällige Ziehen zweier Messpunkte 402a-b wird mehrfach wiederholt und diejenige Linie 404 gewählt, deren *consensus set* die größte Mächtigkeit aufweist.

In einem fünften Schritt S5 wird die so gefundene Linie 404, welche die aktuelle Pose des Kalibrierziels 400 repräsentiert, zu einem in Figur 4b rein beispielhaft gezeigten Bündel 406 von Linien hinzugefügt, die jeweils aus früheren Posen an derselben Position bestimmt wurden. Zu Beginn der Registrierung besteht das Bündel 406 somit nur aus einer einzigen Linie 404. Damit lässt sich in aller Regel die Position 408 des Bündels 406 noch nicht hinreichend genau bestimmen. Deshalb wird in einem sechsten Schritt S6 die Genauigkeit der Positionsbestimmung überprüft und, sofern sie noch nicht ausreicht, das Verfahren beim Schritt S2 mit einer neuen Pose fortgesetzt. Nach mehreren Schleifendurchläufen entsteht dann ein hinreichend dichtes Bündel 406, um durch Mittelung oder ähnliche Verfahren die Position 408 des Bündelzentrums mit einer geforderten hohen Genauigkeit zu bestimmen.

Die Auflösung der Sensoren 100, 200 und die Größe eines gut führbaren Kalibrierziels 400 genügen in der Regel, um jeweils mehrere Messpunkte 402 auf dem Kalibrierziel 400 zu erfassen. Damit kann die Position des Kalibrierziels 400 ausreichend genau gemessen werden. Die Orientierung der Linien 404 ist aber wegen der Rauschanteile der Messpunkte 402 vergleichsweise schlecht bestimmt. Würde man nun versuchen, die aus den Messpunkten 402 des einen Sensors 100, 200 bestimmten Linien 404 in das Koordinatensystem des anderen Sensors 200, 100 zu transformieren, so verbleibt wegen der ungenau bestimmen Orientierung der Linien 404 ein erheblicher Registrierfehler. Deshalb wird erfindungsgemäß nur mit der Position 408 weitergearbeitet, die beispielsweise durch das Zentrum des Bündels 408 bestimmt ist.

Für die erfindungsgemäße Registrierung sind mindestens zwei Positionsbestimmungen erforderlich. Deshalb wird in einem siebten Schritt S7 geprüft, ob eine genügende Anzahl von Positionen erfasst wurde. Falls nicht, wird das Kalibrierziel 400 in einem erneuten Durchlauf der soeben erläuterten Positionsbestimmung mit dem Schritt S1 in eine neue Position gebracht.

Danach stehen in einem achten Schritt S8 zumindest je zwei präzise bestimmte Positionen des Kalibrierziels bezüglich beider Sensoren 100, 200 zur Verfügung. Dies ist rein beispielhaft in Figur 5 illustriert. Die Bündel 406a1, 406a2 an den bezüglich des ersten Sensors 100 gemessenen Positionen 408a1, 408a2 sind dabei mit durchgezogenen Linien dargestellt, die Bündel 406b1, 406b2 an den bezüglich des zweiten Sensors 200 gemessenen Positionen 408b1, 408b2 dagegen mit gestrichelten Linien. Nun wird eine Verbindungslinie 410a durch die Positionen 408a1, 408a2 bezüglich des ersten Sensors 100 und eine Verbindungslinie 410b durch die Positionen 408b1, 408b2 bezüglich des zweiten Sensors 200 gezogen. Die Verbindungslinien 410a-b repräsentieren praktisch eine virtuelle Ebene mit gegenüber dem Kalibrierziel 400 großen Abmessungen. Im Gegensatz zu den aus den Messpunkten 402 des Kalibrierziels 400 bestimmten Linien 404 ist die Ausrichtung dieser virtuellen Ebene sehr präzise bestimmt, weil die zugrundeliegenden Positionen 408a1, 408a2, 408b1, 408b2 nur einen kleinen, in Schritt S6 definierten Messfehler haben, der durch eine entsprechende Anzahl von Posen durch Mittelung auf das geforderte Maß vermindert werden kann.

In einem neunten Schritt S9 wird nun die durch einen Pfeil 412 angedeutete Transformation berechnet, welche die Verbindungslinie 410a in die Verbindungslinie 410b überführt. Dies ist die gesuchte Umrechnung für die Registrierung, welche die Translation, Rotation und eventuell wegen Überkopfstehen eines der Sensoren 100, 200 auch die Spiegelung angibt, mit der Messpunkte 402 bezüglich des einen Sensors 100 in Messpunkte 402 bezüglich des anderen Sensors 200 umgerechnet werden. Im Gegensatz zu einem herkömmlichen Registrierverfahren, bei dem zahlreiche Transformationen für die einzelnen Linien 404 berechnet und anschließend gemittelt würden, muss dazu lediglich eine einzige Transformation berechnet werden.

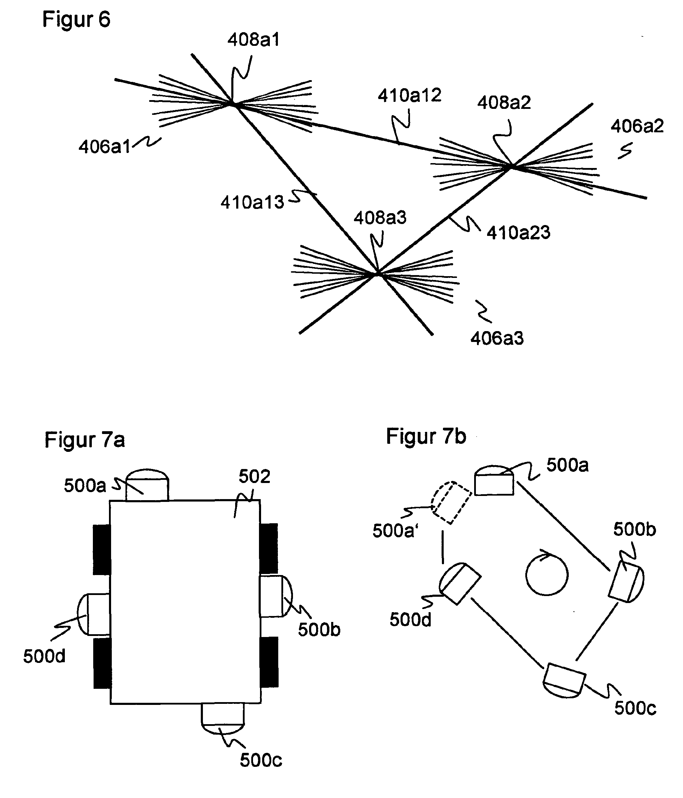

Wie Figur 6 anhand eines Beispiels mit drei Positionen des Kalibrierziels 400 aus Sicht des Sensors 100 illustriert, können im Schritt S7 auch mehr als nur zwei Positionen 408a1, 408a2 gefordert werden. Es entstehen dann zusätzliche Bündel 406a3, Positionen 408a3 und damit Verbindungslinien 410a12, 410a23, 410a13, die in ihrer Gesamtheit oder beliebigen Teilkombinationen der Transformation zugrunde gelegt werden können. Dabei ist nicht mehr sichergestellt, dass eine Transformation, welche eine bestimmte Verbindungslinie 410 zur Deckung bringt, auch für die übrigen Verbindungslinien gilt. Dann wird ein gängiges Optimierungsverfahren angewandt, etwa durch Minimierung des quadratischen Fehlers (least mean square), um eine möglichst gute Übereinstimmung für alle betrachteten Verbindungslinien 410 zu liefern.

Sollen mehr als zwei Sensoren 100, 200 registriert werden, so wird beispielsweise ein Bezugssensor gewählt, zu dem nacheinander die übrigen Sensoren registriert werden. Ein Sonderfall tritt auf, wenn eine Vielzahl von Sensoren keinen gemeinsamen Sichtbereich haben. Dann gibt es keinen gemeinsamen Bezugssensor, mit dem alle übrigen Sensoren direkt registriert werden könnten.

Figur 7a zeigt ein solches Beispiel mit vier Sensoren 500a-d, die zu den vier Seiten eines Fahrzeugs 502 montiert sind, etwa zur Fahrassistenz oder um ein führerloses Fahren zu ermöglichen. Dabei überlappen sich die Sichtbereiche wegen der begrenzten Sichtwinkel und der Verdeckung durch das Fahrzeug 502 selbst nur jeweils paarweise.

Die Registrierung erfolgt dann wie in Figur 7b gezeigt zyklisch und paarweise zunächst mit dem ersten Paar Sensoren 500a, 500b, dann mit dem Paar Sensoren 500b, 500c, dem Paar Sensoren 500c, 500d und schließlich dem Paar Sensoren 500d, 500a, wie der Pfeil in der Mitte der Darstellung andeutet. Da bei den zyklischen Registrierungen schon der jeweilige Ausgangssensor 500a-d einen Registrierungsfehler trägt, stimmt die Position und Orientierung des zum Abschluss des Zyklus' nochmals registrierten ersten Sensors 500a' nicht mit der ursprünglichen Position und Orientierung überein. Die einzelnen Registrierfehler haben sich aufakkumuliert. Um diesen Effekt abzumildern, kann nun rückwirkend der aufakkumulierte Registrierfehler gleichmäßig auf die jeweiligen Paare verteilt werden. Damit wird zumindest eine allzu große Abweichung direkt benachbarter Sensoren 500a-d vermieden.

## Patentansprüche

1. Sensoranordnung (100, 200, 300) zur Objekterkennung in einem Überwachungsbereich (104, 204) mit einem ersten entfernungsmessenden optoelektronischen Sensor (100), insbesondere Laserscanner, und einem zweiten entfernungsmessenden optoelektronishen Sensor (200), insbesondere Laserscanner, deren Sichtbereiche (102, 202) einen gemeinsamen Überlappungsbereich aufweisen, und mit einer gemeinsamen Steuerungseinheit (300), die für die Ermittlung einer Position (408) eines Kalibrierziels (400) in dem Überlappungsbereich bezüglich des ersten Sensors (100) und des zweiten Sensors (200) ausgebildet ist, um in einem Registrierungsmodus eine Transformationsvorschrift zwischen einem ersten Koordinatensystem des ersten Sensors (100) und einem zweiten Koordinatensystem des zweiten Sensors (200) zu bestimmen, so dass Messpunkte (402) der Sensoren (100, 200) in einem gemeinsamen Weltkoordinatensystem zusammenführbar sind,
**dadurch gekennzeichnet,**
**dass** die gemeinsame Steuerungseinheit (300) dafür ausgebildet ist, in dem Registriermodus eine erste Position (408a1, 408b1) und eine von der ersten Position (408a1, 408b1) verschiedene zweite Position (408a2, 408b2) des Kalibrierziels (400) in dem Überlappungsbereich bezüglich des ersten Sensors (100) und bezüglich des zweiten Sensors (200) aus je einem Bündel (406a1, 406b1, 406a2, 406b2) von mehreren Linien (404) zu ermitteln, die in unterschiedlichen Posen des Kalibrierziels (400) an der ersten Position (408a1, 408b1) und in unterschiedlichen Posen des Kalibrierziels (400) an der zweiten Position (408a2, 408b2) bestimmt werden, und die Transformationsvorschrift als diejenige zu bestimmen, welche eine Verbindungslinie (410a) von der ersten Position (408a1) zu der zweiten Position (408a2) bezüglich des ersten Koordinatensystems mit der Verbindungslinie (410b) von der ersten Position (408b1) zu der zweiten Position (408b2) bezüglich des zweiten Koordinatensystems zur Deckung bringt.

2. Sensoranordnung (100, 200, 300) nach Anspruch 1,
wobei die gemeinsame Steuerungseinheit (300) dafür ausgebildet ist, in dem Registriermodus mindestens eine von der ersten Position (408a1) und der zweiten Position (408a2) verschiedene dritte Position (408a3) bezüglich des ersten Sensors (100) und bezüglich des zweiten Sensors (100) zu ermitteln und die Transformationsvorschrift als diejenige zu bestimmen, welche mehrere oder alle Verbindungslinien (410) zwischen den Positionen bezüglich des ersten Koordinatensystems mit entsprechenden Verbindungslinien (410) bezüglich des zweiten Koordinatensystems bestmöglich zur Deckung bringt.

3. Sensoranordnung (100, 200, 300) nach Anspruch 1 oder 2,
wobei das Kalibrierungsziel (400) eine ebene Fläche aufweist, und wobei die gemeinsame Steuerungseinheit (300) dafür ausgebildet ist, aus den in jeweils einer Pose des Kalibrierziels (400) aufgenommenen Messpunkten (402) Cluster zu bilden und das Kalibrierziel (400) in dem Cluster als Linie (404) zu erkennen.

4. Sensoranordnung (100, 200, 300) nach Anspruch 3,
wobei die gemeinsame Steuerungseinheit (300) dafür ausgebildet ist, die Linie (404) in dem Cluster mit einem RANSAC-Verfahren zu erkennen, bei dem wiederholt eine Stichprobe von Messpunkten (402a-b) aus dem Cluster gezogen und ermittelt wird, wie gut eine Linie (404) durch die Stichprobe das Cluster repräsentiert.

5. Sensoranordnung (100, 200, 300) nach Anspruch 3 oder 4,
wobei die gemeinsame Steuerungseinheit (300) dafür ausgebildet ist, eine jeweilige Position (408) des Kalibrierziels (400) als das Zentrum des Bündels (406) zu ermitteln.

6. Sensoranordnung (100, 200, 300) nach einem der vorhergehenden Ansprüche, wobei die gemeinsame Steuerungseinheit (300) dafür ausgebildet ist, so viele unterschiedliche Posen des Kalibrierziels (400) auszuwerten, dass aus dem Bündel (406) der zugehörigen Linien (404) die Position (408) mit einer vorgegebenen Genauigkeit ermittelbar ist, insbesondere eine Rückmeldung an eine Bedienperson zu geben, ob noch weitere Posen für die Erreichung der vorgegebenen Genauigkeit erforderlich sind.

7. Sensoranordnung (100, 200, 300) nach einem der vorhergehenden Ansprüche, wobei die gemeinsame Steuerungseinheit (300) dafür ausgebildet ist, Messpunkte (402) der Sensoren (100, 200) ohne das Kalibrierziel (400) in deren Sichtbereich zu bestimmen, um diese Messpunkte (402) während des Registrierens und/oder des Messbetriebs als Hintergrund auszublenden.

8. Sensoranordnung (100, 200, 300, 500a-d) nach einem der vorhergehenden Ansprüche,
die mindestens einen dritten Sensor (500c-d) umfasst und wobei die gemeinsame Steuerungseinheit (300) dafür ausgebildet ist, eine Vielzahl von Sensoren (500a-d), deren Sichtbereiche zumindest paarweise wenigstens teilweise überlappen, jeweils paarweise zu registrieren und anschließend Registrierungsfehler gleichmäßig auf alle Paare von Sensoren (500a-d) zu verteilen.

9. Sensoranordnung (100, 200, 300) nach einem der vorhergehenden Ansprüche, wobei die Sensoren (100, 200) als Laserscanner ausgebildet sind, deren Überwachungsbereich (18) eine Überwachungsebene ist und die jeweils einen Lichtsender (12) zum Aussenden eines Lichtstrahls (14), einen Lichtempfänger (24) zum Erzeugen eines Empfangssignals aus dem von einem Objekt in der Überwachungsebene (18) remittierten Lichtstrahl (20), eine bewegliche Ablenkeinheit (16a-b) zur periodischen Abtastung der Überwachungsebene (18) sowie eine Lichtlaufzeitbestimmungseinheit (30) zur Entfernungsbestimmung aus der
Zeitdifferenz zwischen Aussenden und Empfang des Lichtstrahls (14, 20) aufweisen, wobei insbesondere die Überwachungsebenen (18, 102, 202) der Laserscanner in derselben Ebene liegen.

10. Sensoranordnung (100, 200, 300) nach einem der vorhergehenden Ansprüche, wobei ein sicherer Ausgang (302) vorgesehen ist, über den von der gemeinsamen Steuerungseinheit (300) ein Abschaltsignal an eine überwachte Gefahrenquelle ausgebbar ist, wenn ein unzulässiger Objekteingriff in einen Schutzbereich erkannt wird.

11. Verfahren zur Registrierung eines ersten entfernungsmessenden optoelektronischen Sensors (100), insbesondere Laserscanners, und eines zweiten entfernungsmessenden optoelektronischen Sensors (200), insbesondere Laserscanners, deren Sichtbereiche (102, 202) einen gemeinsamen Überlappungsbereich aufweisen, wobei eine Position eines Kalibrierziels (400) in dem Überlappungsbereich bezüglich des ersten Sensors (100) und des zweiten Sensors (200) ermittelt wird, um in einem Registrierungsmodus eine Transformationsvorschrift zwischen einem ersten Koordinatensystem des ersten Sensors (100) und einem zweiten Koordinatensystem des zweiten Sensors (200) zu bestimmen, so dass nach erfolgter Registrierung Messpunkte der Sensoren (100, 200) in einem gemeinsamen Weltkoordinatensystem zusammengeführt werden, **dadurch gekennzeichnet,**
**dass** in dem Registriermodus eine erste Position (408a1, 408b1) und eine von der ersten Position (408a1, 408b1) verschiedene zweite Position (408a2, 408b2) des Kalibrierziels (400) in dem Überlappungsbereich bezüglich des ersten Sensors (100) und bezüglich des zweiten Sensors (200) aus je einem Bündel (406a1, 406b1, 406a2, 406b2) von mehreren Linien (404) ermittelt werden, die in unterschiedlichen Posen des Kalibrierziels (400) an der ersten Position (408a1, 408b1) und in unterschiedlichen Posen des Kalibrierziels (400) an der zweiten Position (408a2, 408b2) bestimmt werden, und dass die Transformationsvorschrift als diejenige bestimmt wird, welche eine Verbindungslinie (410a) von der ersten Position (408a1) zu der zweiten Position (408a2) bezüglich des ersten Koordinatensystems mit der Verbindungslinie (41 0b) von der ersten Position (408b1) zu der zweiten Position (408b2) bezüglich des zweiten Koordinatensystems zur Deckung bringt.

## Claims

1. A sensor arrangement (100, 200, 300) for object recognition in a monitored zone (104, 204), the sensor arrangement having a first distance-measuring optoelectronic sensor (100), in particular a laser scanner and a second distance-measuring optoelectronic sensor (200), in particular a laser scanner, the fields of view (102, 202) of the first and second sensors having a common overlap region, and the sensor arrangement also having a common control unit (300) which is formed for determining a position (408) of a calibration target (400) in the overlap region with respect to the first sensor (100) and to the second sensor (200) to determine a transformation instruction between a first coordinate system of the first sensor (100) and a second coordinate system of the second sensor (200) in a registration mode, so that measured points (402) of the sensors (100, 200) can be combined in a common global coordinate system, **characterized in that**
the common control unit (300) is designed to determine in the registration mode a first position (408a1, 408b1) of the calibration target (400) and a second position (408a2, 408b2) of the calibration target (400) different from the first position (408a1, 408b1) in the overlap region with respect to the first sensor (100) and with respect to the second sensor (200) from a respective bundle (406a1, 406b1, 406a2, 406b2) of a plurality of lines (404) which are determined in different poses of the calibration target (400) at the first position (408a1, 408b1) and in different poses of the calibration target (400) at the second position (408a2, 408b2); and to determine the transformation instruction as that transformation instruction which causes a connection line (410a) from the first position (408a1) to the second position (408a2) with respect to the first coordinate system to cover the connection line (410b) from the first position (408b1) to the second position (408b2) with respect to the second coordinate system.

2. A sensor arrangement (100, 200, 300) in accordance with claim 1, wherein the common control unit (300) is designed to determine in the registration mode at least one third position (408a3) different from the first position (408a1) and from the second position 408a2) with respect to the first sensor (100) and with respect to the second sensor (100) and to determine the transformation instruction as that transformation instruction which causes a plurality of connection lines (410), or all connection lines, between the positions with respect to the first coordinate system to cover corresponding connection lines (410) with respect to the second coordinate system as best as possible.

3. A sensor arrangement (100, 200, 300) in accordance with claim 1 or claim 2,
wherein the calibration target (400) has a planar surface; and wherein the common control unit (300) is designed to form clusters from the measured points (402) respectively taken in one pose of the calibration target (400) and to recognize the calibration target (400) in the cluster as a line (404).

4. A sensor arrangement (100, 200, 300) in accordance with claim 3, wherein the common control unit (300) is designed to recognize the line (404) in the cluster using a RANSAC process in which a sample of measured points (402a-b) is repeatedly drawn from the cluster and a determination is made how well a line (404) through the sample represents the cluster.

5. A sensor arrangement (100, 200, 300) in accordance with claim 3 or claim 4,
wherein the common control unit (300) is designed to determine a respective position (408) of the calibration target (400) as the center of the bundle (406).

6. A sensor arrangement (100, 200, 300) in accordance with any one of the preceding claims,
wherein the common control unit (300) is designed to evaluate so many different poses of the calibration target (400) that the position (408) can be determined with a predefined precision from the bundle (406) of the associated lines (404), in particular to give feedback to an operator whether further poses are still required to achieve the predefmed precision.

7. A sensor arrangement (100, 200, 300) in accordance with any one of the preceding claims,
wherein the common control unit (300) is designed to determine measured points (402) of the sensors (100, 200) without the calibration target (400) in their fields of view in order to mask these measured points (402) as background during the registration operation and/or the measurement operation.

8. A sensor arrangement (100, 200, 300, 500a-d) in accordance with any one of the preceding claims,
which includes at least one third sensor (500c-d), and wherein the common control unit (300) is designed to register respective pairs of sensors selected from a plurality of sensors (500a-d) whose fields of view overlap at least pairwise, at least in part, and subsequently to distribute registration errors uniformly over all pairs of sensors (500a-d).

9. A sensor arrangement (100, 200, 300) in accordance with any one of the preceding claims,
wherein the sensors (100, 200) are formed as laser scanners, each laser scanner having a monitored zone (18) in the form of a monitored plane, a light transmitter (12) for transmitting a light bream (14), a light receiver (24) for generating a received signal from a light beam (20) remitted by an object in the monitored plane (18), a movable deflection unit (16a-b) for periodically scanning the monitored plane (18) and a light transit time determination unit (30) for determining the distance from the time difference between the transmission of the light beam and the reception of the light beam (14, 20), wherein the monitored planes (18, 102, 202) of the laser scanners in particular lie in the same plane

10. A sensor arrangement (100, 200, 300) in accordance with any one of the preceding claims,
wherein a secure output (302) is provided via which a switch-off signal can be output by the common control unit (300) to a monitored source of danger when an unauthorized object intrusion into a protected zone is recognized.

11. A method of registering a first distance-measuring optoelectronic sensor (100) , in particular a laser scanner, and a second distance-measuring optoelectronic sensor (200), in particular a laser scanner, the fields of view (102, 202) of the first and second sensors having a common overlap region, wherein a position of a calibration target (400) is determined in the overlap region with respect to the first sensor (100) and with respect to the second sensor (200) to determine in a registration mode a transformation instruction between a first coordinate system of the first sensor (100) and a second coordinate system of the second sensor (200) so that, after a registration has taken place, measured points of the sensors (100, 200) are combined in a common global coordinate system, **characterized in that**,
in the registration mode a first position (408a1, 408b1) of the calibration target (400) and a second position (408a2, 408b2) of the calibration target (400) different from the first position (408a1, 408b1) in the overlap region are determined with respect to the first sensor (100) and with respect to the second sensor (200) from a respective bundle (406a1, 406b1, 406a2, 406b2) of a plurality of lines (404) which are determined in different poses of the calibration target (400) at the first position (408a1, 408b1) and in different poses of the calibration target (400) at the second position (408a2, 408b2); and **in that** the transformation instruction is determined as that transformation instruction which causes a connection line (410a) from the first position (408a1) to the second position (408a2) with respect to the first coordinate system to cover the connection line (410b) from the first position (408b1) to the second position (408b2) with respect to the second coordinate system.

## Revendications

1. Agencement de détection (100, 200, 300) pour la reconnaissance d'objets dans une zone de surveillance (104, 204), comprenant un premier capteur optoélectronique (100) mesurant des éloignements, en particulier un scanner à laser, et un second capteur optoélectronique (200) mesurant des éloignements, en particulier un scanner à laser, dont les zones de vision (102, 202) présentent une zone de chevauchement commune, et comprenant une unité de commande commune (300), qui est réalisée pour la détermination d'une position (408) d'une cible de calibrage (400) dans la zone de chevauchement par rapport au premier capteur (100) et au second capteur (200) afin de déterminer, dans un mode de concordance, une règle de transformation entre un premier système de coordonnées du premier capteur (100) et un second système de coordonnées du second capteur (200) de sorte que des points de mesure (402) des capteurs (100, 200) sont susceptibles d'être regroupés dans un système de coordonnées universel commun,
**caractérisé en ce que** l'unité de commande commune (300) est réalisée pour, dans le mode de concordance, déterminer une première position (408a1, 408b1) et une seconde position (408a2, 408b2) différente de la première position (408a1, 408b1) de la cible de calibrage (400) dans la zone de chevauchement par rapport au premier capteur (100) et par rapport au second capteur (200) à partir d'un faisceau respectif (406a1, 406b1, 406a2, 406b2) de plusieurs lignes (404) qui sont déterminées dans différentes poses de la cible de calibrage (400) à la première position (408a1, 408b1) et dans différentes poses de la cible de calibrage (400) à la seconde position (408a2, 408b2), et pour déterminer la règle de transformation comme étant celle qui amène en coïncidence une ligne de liaison (410a) allant de la première position (408a1) à la seconde position (408a2) par référence au premier système de coordonnées avec la ligne de liaison (410b) allant de la première position (408b1) à la seconde position (408b2) par référence au second système de coordonnées.

2. Agencement de détection (100, 200, 300) selon la revendication 1, dans lequel l'unité de commande commune (300) est réalisée pour, dans le mode de concordance, déterminer au moins une troisième position (408a3) différente de la première position (408a1) et de la seconde position (408a2) par référence au premier capteur (100) et par référence au second capteur (100) et pour déterminer la règle de transformation comme étant celle qui amène le mieux possible en coïncidence plusieurs ou toutes les lignes de liaison (410) entre les positions par référence au premier système de coordonnées avec des lignes de liaison correspondantes (410) par référence au second système de coordonnées.

3. Agencement de détection (100, 200, 300) selon la revendication 1 ou 2,
dans lequel la cible de calibrage (400) présente une surface plane, et dans lequel l'unité de commande commune (300) est réalisée pour, à partir des points de mesure (402) enregistrés dans une pose respective de la cible de calibrage (400), former des grappes, et pour reconnaître la cible de calibrage (400) dans la grappe sous forme de ligne (404).

4. Agencement de détection (100, 200, 300) selon la revendication 3, dans lequel l'unité de commande commune (300) est réalisée pour reconnaître la ligne dans la grappe avec un procédé "RANSAC" dans lequel on tire hors de la grappe de façon répétée un échantillon de points de mesure (402a-b) et l'on détermine de quelle manière la grappe est bien représentée par une ligne (404) à travers l'échantillon.

5. Agencement de détection (100, 200, 300) selon la revendication 3 ou 4,
dans lequel l'unité de commande commune (300) est réalisée pour déterminer une position respective (408) de la cible de calibrage (400) comme étant le centre du faisceau (406).

6. Agencement de détection (100, 200, 300) selon l'une des revendications précédentes,
dans lequel l'unité de commande commune (30) est réalisée pour évaluer des poses différentes de la cible de calibrage (400) en nombre aussi grand qu'il est possible de déterminer à partir du faisceau (406) des lignes associées (404) la position (408) avec une précision prédéterminée, en particulier pour envoyer une information en retour à un opérateur quant à savoir si d'autres poses sont nécessaires pour atteindre la précision prédéterminée.

7. Agencement de détection (100, 200, 300) selon l'une des revendications précédentes,
dans lequel l'unité de commande commune (300) est réalisée pour déterminer des points de mesure (402) des capteurs (100, 200) sans la cible de calibrage (400) dans leur zone de vision, afin de masquer ces points de mesure (402) pendant la mise en concordance et/ou le fonctionnement en mesure, comme appartenant à l'arrière-plan.

8. Agencement de détection (100, 200, 300, 500a-d) selon l'une des revendications précédentes,
qui comprend au moins un troisième capteur (500c-d) et dans lequel l'unité de commande commune (300) est réalisée pour mettre une pluralité de capteurs (500a-d), dont les zones de vision se chevauchent au moins partiellement et au moins par paires, respectivement par paires, et pour répartir ensuite des erreurs de concordance de façon régulière à toutes les paires de capteur (500a-d).

9. Agencement de détection (100, 200, 300) selon l'une des revendications précédentes,
dans lequel les capteurs (100, 200) sont réalisés sous forme de scanner à laser dont la zone de surveillance (18) est un plan de surveillance et qui comprennent chacun un émetteur de lumière (12) pour émettre un rayon de lumière (14), un récepteur de lumière (24) pour générer un signal de réception à partir d'un rayon de lumière (20) réémis depuis un objet dans le plan de surveillance (18), une unité de déflexion mobile (16a-b) pour palper périodiquement le plan de surveillance (18) ainsi qu'une unité de détermination de temps de parcours de la lumière (30) pour déterminer l'éloignement à partir de la différence de temps entre l'émission et la réception du rayon de lumière (14, 20), et les plans de surveillance (18, 102, 202) des scanners à laser sont en particulier dans le même plan.

10. Agencement de détection (100, 200, 300) selon l'une des revendications précédentes,
dans lequel il est prévu une sortie de sécurité (302) via laquelle un signal de coupure peut être envoyé depuis l'unité de commande commune (300) à une source de danger surveillée si une intervention inadmissible d'un objet est reconnue dans une zone protégée.

11. Procédé pour mettre en concordance un premier capteur optoélectronique mesurant des éloignements (100), en particulier un scanner à laser, et un second capteur optoélectronique mesurant des éloignements (200), en particulier un scanner à laser, dont les zones de vision (102, 202) présentent une zone de chevauchement commune, dans lequel une position d'une cible de calibrage (400) dans la zone de chevauchement est déterminée par référence au premier capteur (100) et par référence au second capteur (200) afin de déterminer, dans un mode de concordance, une règle de transformation entre un premier système de coordonnées du premier capteur (100) et un second système de coordonnées du second capteur (200), de telle façon qu'une fois la concordance effectuée on regroupe des points de mesure des capteurs (100, 200) dans un système de coordonnées universel commun, **caractérisé en ce que**
dans le mode de concordance, on détermine une première position (408a1, 408b1) et une seconde position (408a2, 408b2), différente de la première position (408a1, 408b1), de la cible de calibrage (400) dans la zone de chevauchement par référence au premier capteur (100) et par référence au second capteur (200) à partir d'un faisceau respectif (406a1, 406b1, 406a2, 406b2) de plusieurs lignes (404) qui ont été déterminées dans différentes poses de la cible de calibrage (400) à la première position (408a1, 408b1) et dans différentes poses de la cible de calibrage (400) à la seconde position (408a2, 408b2), et **en ce que** la règle de transformation est déterminée comme étant celle qui amène en coïncidence une ligne de liaison (410a) allant de la première position (408a1) à la seconde position (408a2) par référence au premier système de coordonnées avec la ligne de liaison (410b) allant de la première position (408b1) à la seconde position (408b2) par référence au second système de coordonnées.
